# EUROPEAN PATENT APPLICATION

(11) **EP 2 437 562 A1**
(43) Date of publication of application: **04.04.2012**
(21) Application number: 10780626.7
(22) Date of filing: 21.05.2010
(51) Int. Cl.: H04W 72/04, H04W 24/10

(54) **BASE STATION APPARATUS, COMMUNICATION SYSTEM, MAPPING CONTROL METHOD, AND PROGRAM RECORDING MEDIUM**

(30) Priority: 25.05.2009 JP 2009125435
(71) Applicant: NEC Corporation, Tokyo 108-8001 (JP)
(72) Inventor: MABUCHI, Tetsuo, Tokyo 108-8001 (JP)
(74) Representative: Glawe, Delfs, Moll
(86) International application number: PCT/JP2010/059050
(87) International publication number: WO 2010/137672

(57) **Abstract**

Downlink control information including uplink control information can be transmit efficiently. That is, a base station apparatus that configure a communication system includes changing means. The changing means changes a component carrier as a mapping target on which downlink control information including control information about uplink is mapped based on a predetermined processing procedure, among a plurality of component carriers having mutually different frequency bands within a frequency band used for downlink.

## Description

### [Technical Field]

The present invention relates to a base station, a communication system, a mapping control method and a program storage medium in regard to a wireless communication.

### [Background Art]

In recent years, LTE (Long Term Evolution) which is one of communication systems is standardized by 3GPP (3rd Generation Partnership Project) (for example, see non-patent literature 1). LTE is a communication system which becomes succession of W-CDMA (Wideband Code Division Multiple Access), HSDPA (High Speed Downlink Packet Access) and HSUPA (High Speed Uplink Packet Access).

In LTE, a plurality of user equipments (UE) share one or more physical channels with regard to each of a uplink and a downlink. The user equipments (UE) communicate with a base station by using those physical channels. The channel shared of the user equipments (UE) is generally called a shared channel. In LTE, the shared channel is called a physical uplink shared channel (PUSCH) in uplink, and in downlink, the shared channel is called a physical downlink shared channel (PDSCH).

Further, in a communication system using the shared channels, it is necessary to perform signaling for each of sub-frame in order to determine the user equipment (UE) to which the shared channel is assigned. A control channel used for the signaling is called a physical downlink control channel (PDCCH) in LTE. The control channel is also sometimes referred to as DL L1/L2 CCH (DownLink L1/L2 Control CHannel). Downlink control information (DCI) is mapped on the physical downlink control channel (PDCCH).

The base station transmits the physical downlink control channel (PDCCH) on which DCI is mapped to the user equipment (UE). The user equipment (UE) transmits the physical uplink shared channel (PUSCH) to the base station based on the DCI mapped on PDCCH. The base station receives and decodes the physical uplink shared channel (PUSCH) transmitted from the user equipment (UE).

Further, in recent years, in case where the width of frequency band used for downlink and the width of frequency band used for uplink are different like LTE-A (Long Term Evolution-Advanced), it is desired to send (transmit) efficiently DCI which includes a control information for uplink (uplink control information).

Now, a patent literature 1 discloses technology which notifies an amount of radio resources used for a control channel.

Also, a patent literature 2 discloses technology in which a base station 200 assigns a channel for transmitting communication data to a terminal apparatus based on received state information received from the terminal apparatus.

Further, a patent literature 3 discloses technology which uses efficiently a radio resource by multiplexing the control information efficiently on an uplink control channel.

### [Citation List]

### [Patent Literature]

[PTL1] Japanese Patent Application Publication No. 2008-278341
[PTL 2] Japanese Patent Application Publication No. 2008-271199
[PTL 3] Japanese Patent Application Publication No. 2009-49539

### [Non Patent Literature]

[NPL1] 3GPP TS 36.212 (V8.5.0), "Multiplexing and channel coding", December 2008

### [Summary of Invention]

### [Technical Problem]

The patent literature 1, as mentioned above, discloses the technology which notifies the amount of radio resources used for the control channel. However, the patent literature 1 does not disclose technology which transmits efficiently DCI including the uplink control information. Each of the patent literatures 2 and 3 discloses the technology which uses efficiently the radio resource. However, none of the patent literatures 2 and 3, as well as the patent literature 1, do not disclose the technology which transmits efficiently DCI including the uplink control information.

The present invention has been made in view of the above-mentioned circumstances. That is, the object of the present invention is mainly to provide a base station apparatus, a communication system, a mapping control method and a program storage medium, which is capable of transmitting efficiently the downlink control information (DCI) including the uplink control information.

### [Solution to Problem]

A base station apparatus of the present invention includes:
changing means for changing a component carrier as a mapping target on which downlink control information including control information about uplink is mapped based on a predetermined processing procedure, among a plurality of component carriers having mutually different frequency bands within a frequency band used for downlink.

A communication system of the present invention includes:
a base station apparatus of the present invention; and
a mobile station that communicates with the base station apparatus by a wireless communication, based on control information about uplink and downlink control information acquired from the base station apparatus.

A mapping control method of the present invention includes:
acquiring necessary information to change component carrier as a mapping target on which downlink control information including control information about uplink is mapped, among a plurality of component carriers having mutually different frequency bands within a frequency band used for downlink; and
changing the component carrier as the mapping target based on the acquired information and a predetermined processing procedure.

A program storage medium of the present invention, which is stored a processing procedure, the processing procedure including a processing procedure to change a component carrier as a mapping target on which downlink control information including control information about uplink is mapped, among a plurality of component carriers having mutually different frequency bands in a frequency band used for downlink.

### [Advantageous Effects of Invention]

According to the present invention, it is possible to transmit efficiently the downlink control information (DCI) including the uplink control information.

### [Brief Description of Drawings]

Fig. 1a is a block diagram illustrating a base station apparatus of the first exemplary embodiment.
Fig. 1b is a block diagram showing a configuration of the base station apparatus of the first exemplary embodiment together with a program storage medium which gives a program (computer program) thereto.
Fig. 1c is a figure showing a procedure for a mapping control processing in the base station apparatus of the first exemplary embodiment.
Fig. 1d is a block diagram showing an example of a communication system including the base station apparatus of the first exemplary embodiment.
Fig. 2 is a figure showing a system configuration of a communication system according to a second exemplary embodiment.
Fig. 3 is a block diagram showing an exemplary internal configuration of a base station apparatus and a mobile station.
Fig. 4 is a figure sowing an example of a state in which a frequency band for downlink and a frequency band for uplink is sectioned respectively.
Fig. 5 is a figure illustrating an example of mapping DCI (Downlink Control Information) including the uplink control information in CC (Component Carrier).
Fig. 6 is a figure illustrating other example of mapping DCI in CC.

### [Description of Embodiments]

### (A first exemplary embodiment)

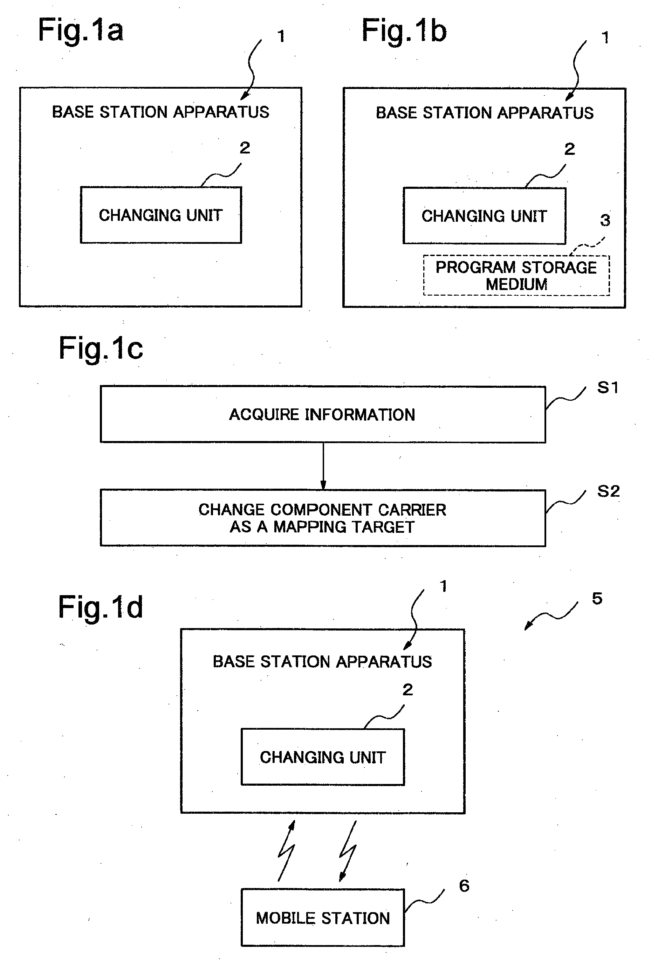

As shown in Fig. 1a, a base station apparatus 1 of a first exemplary embodiment includes a changing unit (changing means) 2. According to this first exemplary embodiment, a plurality of component carriers are set in a frequency band using for a downlink. Each of those component carriers has a mutually different frequency band. The component carrier as a mapping target is selected from those component carriers. The downlink control information including the control information for uplink (uplink control information) is mapped in the component carrier which is the mapping target.

The changing unit 2 has a function to change the component carrier (the mapping target) based on a predetermined processing procedure.

According to this first exemplary embodiment, the base station apparatus 1 changes the component carrier as the mapping target (the component carrier on which the downlink control information including the uplink control information is mapped) as follows.

For example, first, the base station apparatus 1 acquires necessary information for changing the component carrier as the mapping target (Step S1 of Fig. 1c).

Next, the base station apparatus 1 changes the component carrier as the mapping target based on the acquired information and the predetermined processing procedure (Step S2).

A program (computer program) which makes the base station apparatus 1 perform the operation (control) procedure is stored in a program storage medium 3 indicated by a dotted line of Fig. 1b. The base station apparatus 1 changes the component carrier (the mapping target ) by operating based on the program stored in the program storage medium 3.

Because the component carrier as the mapping target is changed, the base station apparatus 1 of the first exemplary embodiment can transmit efficiently the downlink control information to a transmission partner. In other words, channel quality (channel state) with regard to each of plural component carriers used for the downlink varies respectively due to various causes. Therefore, the following problem occurs unless the component carrier as the mapping target (component carrier on which the downlink control information is mapped) is changed.

That is, it is assumed that the component carrier as the mapping target is fixed. In this case, if the channel quality about the component carrier (the mapping target) continues to be bad, a problem that the downlink control information cannot be efficiently transmitted occurs.

In contrast, in the first exemplary embodiment, the base station apparatus 1 can change the component carrier as the mapping target. For this reason, for example, the base station apparatus 1 changes the component carrier as the mapping target based on monitoring information about channel quality so that the downlink control information is mapped on the component carrier having fine channel quality. As a result, it becomes possible for the base station apparatus 1 to send (transmit) efficiently the downlink control information.

The base station apparatus 1 can compose a communication system 5 shown in Fig. 1d. The communication system 5 includes the base station apparatus 1 and a mobile station 6. The mobile station 6 has a function to communicate with the base station apparatus 1 by wireless communication based on the uplink control information and the downlink control information acquired from the base station apparatus 1.

Including the base station apparatus 1, this communication system 5 can send (transmit) efficiently the downlink control information to the mobile station 6 from the base station apparatus 1. As a result, for example, it can achieve high speed data communication between the base station apparatus 1 and the mobile station 6.

### (A second exemplary embodiment)

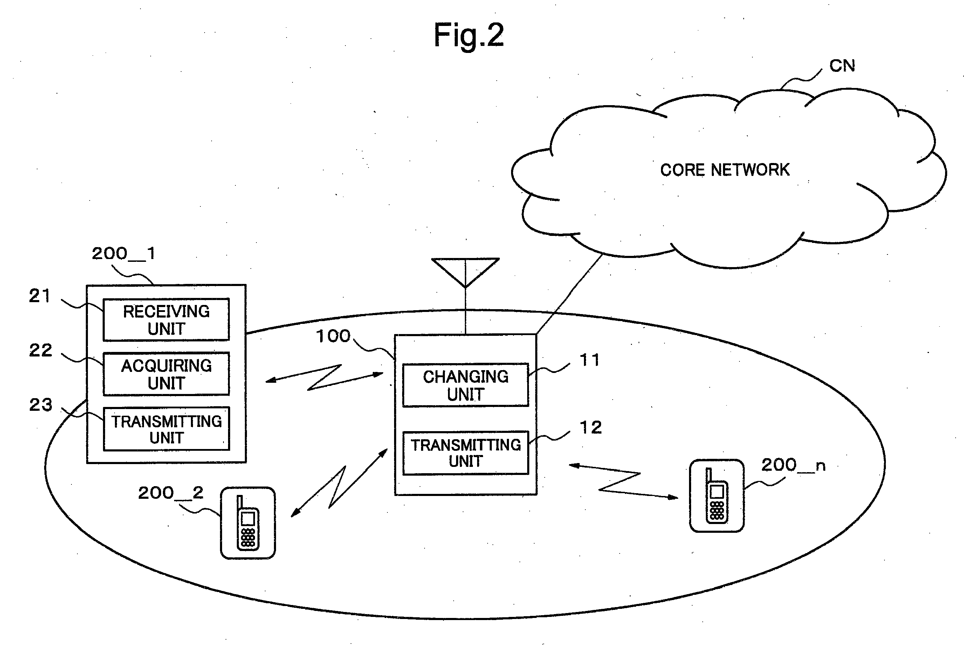

First, the outline of a communication system in a second exemplary embodiment will be described with reference to Fig. 2.

In the second exemplary embodiment, the communication system includes a base station (a base station apparatus) 100 and mobile stations 200_1-n.

In the second exemplary embodiment, the base station 100 includes a changing unit (changing means) 11 and a transmitting unit 12. The changing unit 11 has a function to change the component carrier (CC) as the mapping target. Information to be mapped on the CC is the downlink control information (DCI) which includes the control information for the uplink (uplink control information). The transmitting unit 12 has a function to transmit the physical downlink control channel (PDCCH) which is the modulated the CC to the mobile stations 200_1-n.

In the second exemplary embodiment, each of the mobile stations 200_1-n includes a receiving unit 21, an acquiring unit 22 and a transmitting unit 23. The receiving unit 21 has a function to receive the PDCCH transmitted from the base station 100. The acquiring unit 22 has a function to acquire the DCI mapped on the CC in the PDCCH (de-mapping). The transmitting unit 23 has a function to transmit the physical uplink shared channel (PUSCH) to the base station 100 based on the uplink control information included in the DCI which the acquiring unit 22 acquired.

The communication system of the second exemplary embodiment has the configuration as above. As a result, the base station 100 can transmit efficiently the DCI including the uplink control information to the mobile stations 200_1-n.

### (System configuration)

Hereinafter, the communication system of the second exemplary embodiment will be described in detail with reference to accompanying drawings.

First, a system configuration example of the communication system in the second exemplary embodiment will be described with reference to Fig. 2. The communication system of the second exemplary embodiment is applicable to, for example, E-UTRA (Evolved Universal Terrestrial Radio Access) or UTRAN (UMTS (Universal Mobile Telecommunication System) Terrestrial Radio Access Network) or the like.

The communication system of the second exemplary embodiment includes the base station 100 and the mobile stations 200_1-n (n is an arbitrary integer). In this communication system, the mobile stations 200_1-n existing in an area under control of the base station 100 connect with the base station 100 and communicate with a core network (CN) via the base station 100.

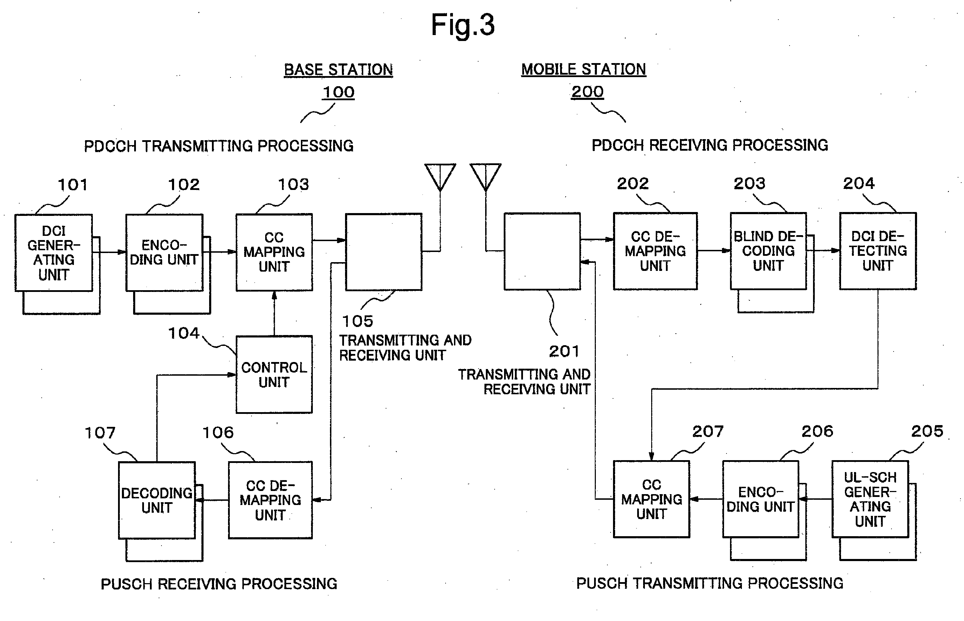

As shown in Fig. 3, the base station 100 includes a DCI (Downlink Control Information) generating unit 101, an encoding unit 102 and a CC (Component Carrier) mapping unit 103. Further, the base station 100 includes a control unit 104, a transmitting and receiving unit 105, a CC de-mapping unit 106 and a decoding unit 107.

As shown in Fig. 3, the mobile stations 200_1-n include a transmitting and receiving unit 201, a CC de-mapping unit 202, a blind decoding unit 203 and a DCI detecting unit 204. Further, the mobile stations 200_1 - n include a UL-SCH (UpLink-Shared CHannel) generating unit 205, an encoding unit 206 and a CC mapping unit 207.

The DCI generating unit 101 of the base station 100 has a function to generate the DCI. For example, the DCI generating unit 101 generates resource assignment information on the uplink and the downlink, information about HARQ (Hybrid Automatic Repeat reQuest), information about AMC (Adaptive Modulation and Coding) or the like as the DCI. For example, in LTE (Long Term Evolution) standardization, the uplink control information to be multiplexed on the downlink control information (DCI) is set as information on the basis of format 0.

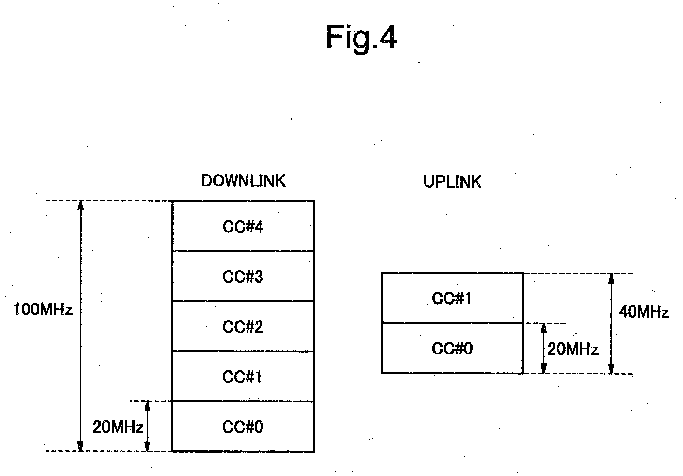

Fig. 4 shows an example of frequency assignment assumed in LTE-A (Long Term Evolution-Advanced). In this example, a basic frequency band which is basically similar to LTE is divided into 20MHz bandwidth, and each of the divided band is set as the component carrier (CC). For example, in Fig. 4, the frequency band used for the downlink is 100MHz bandwidth. Five CCs (downlink CCs) are set to the frequency band for the downlink. The frequency band used for the uplink is 40MHz bandwidth. Two CCs (uplink CCs) are set to the frequency band for the uplink.

In the communication system of the second exemplary embodiment, in a case where the HARQ or the AMC is controlled for each CC, the uplink control information is required for each CC. In the example of Fig. 4, because two uplink CCs are set to the uplink, two uplink control information is required. In this case, the base station 100 maps the two uplink control information (control information on the basis of format 0) as the DCI respectively somewhere on the five downlink CCs for the downlink. The mapping is performed as follows.

That is, the control unit 104 in the base station 100 shown in Fig. 3 confirms the frequency band (CC) which the mobile station 200 uses, based on information about a frequency band notified from the mobile station 200. As a result, the control unit 104 recognizes that the two uplink control information is required.

The DCI generating unit 101 generates the DCI which includes the uplink control information (control information on the basis of format 0) required by uplink. The encoding unit 102 performs a coding processing which codes the DCI generated by the DCI generation unit 101. The control unit 104 determines the CC on which the DCI is mapped from the five downlink CCs used for the downlink as will be described later. In other words, the control unit 104 has a function as the changing unit (changing means) to change the CC as the mapping target on which the DCI including the uplink control information is mapped.

The CC mapping unit 103 maps the DCI on the CC determined by the control unit 104. The transmitting and receiving unit 105 modulates the CC for the downlink, and transmits the CC as PDCCH (Physical Downlink Control CHannel) after modulating.

The mobile station 200 receives the PDCCH transmitted by the base station 100. The transmitting and receiving unit 201 demodulates the received PDCCH. The CC de-mapping unit 202 extracts (de-maps) the DCI from the downlink CC multiplexed. The blind decoding unit 203 decodes the DCI. The DCI detecting unit 204 detects the DCI having an address to own station 200. In other words, CRC (Cyclic Redundancy Check) is included in the DCI. A number unique to the mobile station 200 to which the DCI is transmitted is multiplexed in the CRC. By the unique number, only the DCI having the address to own station 200 is judged as CRC OK. For this reason, the DCI detecting unit 204 can detect the DCI having the address to own station 200. In the second exemplary embodiment, the mobile station 200 controls the PUSCH (Physical Uplink Shared CHannel) for the uplink based on the uplink control information (control information on the basis of format 0) which is included in the DCI having the address to own station 200.

The UL-SCH generating unit 205 generates an uplink data channel. The encoding unit 206 encodes the uplink data channel. The CC mapping unit 207 controls a resource assignment, the HARQ, the AMC or the like based on the uplink control information detected by the DCI detecting unit 204. Further, the CC mapping unit 207 maps the control information in the two uplink CCs for the uplink. The transmitting and receiving unit 201 modulates the CC for the uplink and transmits the CC as PUSCH (Physical Uplink Shared CHannel) after modulating.

The base station 100 receives the PUSCH transmitted by the mobile station 200. The transmitting and receiving unit 105 demodulates the received PUSCH. The CC de-mapping unit 106 extracts (de-maps) the control information from the multiplexed uplink CC. The decoding unit 107 decodes the control information. The control unit 104 determines the CC as the mapping target (CC on which the DCI is mapped) from the five downlink CCs for the downlink, by using the control information (for example, CQI (Channel Quality Information)) given by the decoding unit 107 as will be described later.

### (Operation to map the DCI including the uplink control information)

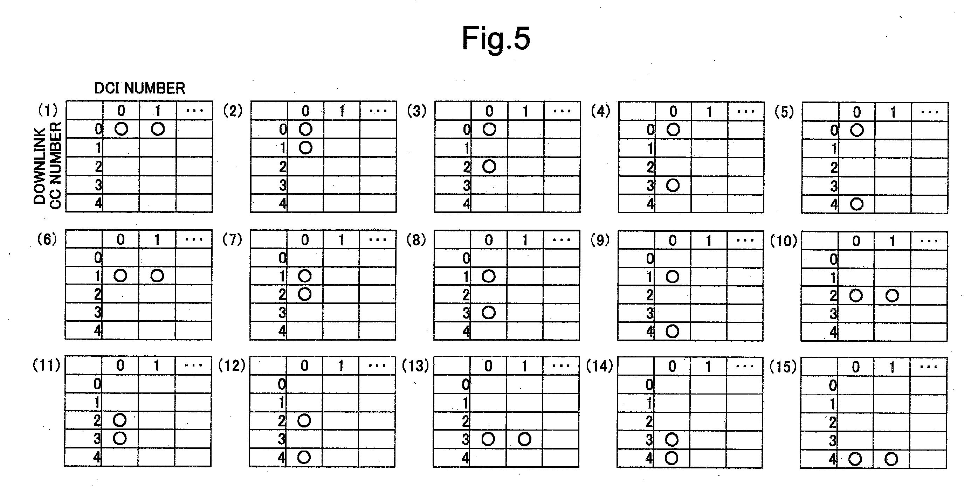

Next, processing operation when the DCI including the uplink control information is mapped on the CC will be described. Fig. 5 is a figure illustrating the CC on which the DCI including the uplink control information is mapped.

In a table shown in Fig. 5, each row indicates "downlink CC number" of the CC which is set to the frequency band for the downlink, and each column indicates "DCI number" to be mapped on the downlink CC.

In this example, the frequency band for the downlink has 100MHz bandwidth. Five downlink CCs (CC#0-CC#4) each having 20MHz bandwidth as shown in Fig. 4 are set to the frequency band for the downlink. Also, the frequency band for the uplink has 40MHz bandwidth. Two uplink CCs (CC#0-CC#1) each having 20MHz bandwidth are set to the frequency band for the uplink. In such case, the number of combinations for assigning the two control information (the uplink control information) relating with the two uplink CCs to the downlink CC will be fifteen ways as shown in Fig. 5.

In Fig. 5, a circle (O) indicates the location where the DCI including the uplink control information is mapped on the downlink CC, and the DCI number to be used as the uplink control information. In Fig. 5, it is considered a case where the two DCI including the uplink control information is mapped on the same downlink CC. For example, a table (1) shown in Fig. 5 indicates a case where the two DCI is mapped on the downlink CC number =0.

Further, Fig. 5 shows a example in a case that the base station 100 maps the DCI including the uplink control information for one mobile station 200 on the downlink CC. In contrast, in a case that the uplink control information is transmitted to a plurality of mobile stations 200 respectively, the base station 100 maps dynamically each DCI including the uplink control information relating with each mobile station 200 on the downlink CC.

According to this second exemplary embodiment, for example, the base station 100 changes the CC as the mapping target periodically (for example, every TTI (Transmit Time Interval)), using all or a part of combinations of CCs as the mapping target in Fig. 5. Thus, by changing CCs as the mapping target periodically, the base station 100 can get a certain degree of a frequency diversity effect by easy control.

Also, CQI (Channel Quality Information) may be used in order to raise the communication quality. The CQI is information representing the channel quality which is measured every mobile station 200 and reported to the base station 100. In a case of using the CQI, the base station 100 determines a frequency band (downlink CC) having fine channel quality based on the CQI which the mobile station 200 measures for each CC. And the base station 100 maps the DCI including the uplink control information on the downlink CC having the fine channel quality on a priority basis. For example, it is assumed that the base station 100 determines that an order of the downlink CC from the fine channel quality is CC#2 → (represent an arrow) CC#4 → CC#0 → CC#1 → CC#3 based on the CQI acquired from the mobile station 200. In this case, the base station 100 maps the two DCI including the uplink control information on the CC#2 and the CC#4 respectively.

In a case where a plurality of mobile stations 200 exist, the base station 100 performs a scheduling based on the downlink CQI of each mobile station 200. Thus, the base station 100 assigns the downlink CC, which is needed by each mobile station 200, to each mobile station 200. Further, the base station 100 maps the DCI on the downlink CC assigned to each mobile station 200. However, the number of the DCI which can be mapped on the downlink CC (the mapping upper limit value) is limited. For this reason, the base station 100 assigns the downlink CC to each mobile station 200 with considering the mapping upper limit value in the downlink CC (perform scheduling).

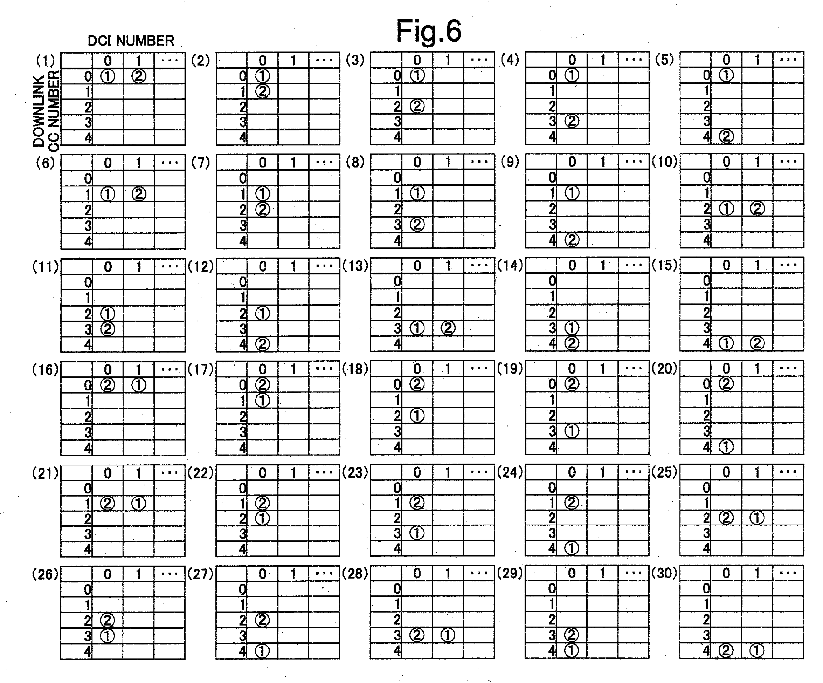

Further, in a case where there is preferential order in the two uplink control information relating with CC#0 and CC#1 used for the uplink, the priority is set on the DCI including the uplink control information. In this case, as shown in Fig. 6, the number of combinations of the downlink CCs on which the DCI is mapped is thirty ways.

In Fig. 6, the number in the circle (O) indicates the priority of the DCI. In a case that the DCI has the priority as mentioned above, the base station 100 assigns in order from the first priority DCI (i.e., in order of the DCI with higher priority) to the downlink CC. For example, it is assumed that a preferential order is set to the uplinks CC#0 → CC#1. In table (1) of Fig. 6, the DCI (the downlink CC number =0 and the DCI number =0) is the first priority, and the DCI (the downlink CC number =0 and the DCI number =1) is the second priority. In this case, the base station 100 assigns the uplink control information included in the DCI (the downlink CC number =0 and the DCI number =0) to CC#0 for the uplink. Also, the base station 100 assigns the uplink control information included in the DCI (the downlink CC number =0 and the DCI number =1) to CC#1 for the uplink. Further, it is assumed that the base station 100 determines that the order of the downlink CCs from the fine channel quality is CC#2 → CC#4 → CC#0 → CC#1 → CC#3 based on the CQI acquired from the mobile station 200. In this case, the base station 100 maps the DCI from the downlink CC#2 having the fine channel quality on a priority basis.

### (Action and effect)

There is a case that a frequency bandwidth used for the downlink and a frequency bandwidth used for the uplink is different each other like LTE-A. According to the second exemplary embodiment, in such case, the base station 100 can change the CC (Component Carrier) as the mapping target on which the DCI (Downlink Control Information) including the uplink control information is mapped. For example, the base station 100 changes the CC as the mapping target periodically. As a result, the base station 100 can obtain a certain degree of the frequency diversity effect by easy control.

Also, by changing the CC as the mapping target based on the CQI (Channel Quality Information) acquired from the mobile station 200, the base station 100 can improve the communication quality.

Further, in the case where a plurality of mobile stations 200_1-n exist, the base station 100 assigns the downlink CC dynamically to each of the mobile stations 200_1-n, with considering the CQI of each the mobile station 200_1-n, the mapping upper limit value of the DCI which can be mapped on the downlink CC, or the like. Then, the base station 100 maps the DCI on the downlink CC which is assigned dynamically to each of the mobile stations 200_1-n. Thus, the base station 100 can efficiently transmit the DCI to each of the mobile stations 200_1-n by mapping the DCI on the CC like this manner.

### (Other exemplary embodiment)

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

For example, the communication system in each exemplary embodiment does not depend on Version of 3GPP.

Also, in each exemplary embodiment, each apparatus which constitutes the communication system can perform the above-mentioned operation by hardware, software or a configuration which combines both of them.

Further, in a case when processing is executed by using software, a program which represents a processing sequences (processing procedures) is installed in a memory in the computer included in a dedicated hardware. And, the processing is executed by operating the computer according to the program in the memory. Or, by installing the program in a memory of a general-purpose computer which can execute various processing, the processing is executed by the general-purpose computer.

For example, the program can be recorded in a hard disk or ROM (Read Only Memory) as a storage medium in advance. Or, the program can be stored (recorded) in a removable storage medium temporarily or permanently. Such removable storage medium can be provided as a so-called packaged software. As the removable storage medium, a floppy (registered trademark) disk, a CD-ROM (Compact Disc Read Only Memory), a MO (Magneto optical) disk, a DVD (Digital Versatile Disc), a magnetic disk and a semiconductor memory are mentioned.

Further, the program is installed in a computer from the removable storage medium. Or, the program is installed in a computer from a download site by wireless transmission. Or, by a wire transmission via a network, the program is installed in a computer to a computer from a download site.

The communication system in each exemplary embodiment does not just process chronologically according to the processing operation described in each exemplary embodiment. For example, it is possible to configure the communication system so that the processing operation may perform in parallel or individually, as necessary or depending on the processing capability of the apparatus.

Also, the communication system according to each exemplary embodiment may be configured by the logical assembly composition of a plurality of apparatuses, or may be configured by including the apparatus of each configuration in a same chassis.

Further, as other exemplary embodiment, the base station may include a changing means which changes the CC (Component Carrier) on which the DCI (Downlink Control Information) including the uplink control information is mapped.

Further, as the different other exemplary embodiment, a mobile station includes: reception means for receiving the PDCCH (Physical Downlink Control CHannel) which is the modulated CC (Component Carrier) on which the DCI (Downlink Control Information) including the uplink control information is mapped; acquiring means for acquiring the DCI mapped on the CC in the PDCCH; and transmitting means for transmitting the PUSCH (Physical Uplink Shared CHannel) based on the uplink control information included in the DCI acquired by the acquiring means.

Further, as the different other exemplary embodiment, a communication system includes at least a base station and a mobile station. In this communication system, the base station includes: changing means for changing the CC (Component Carrier) on which the DCI (Downlink Control Information) including the uplink control information is mapped; and transmitting means for transmitting the PDCCH (Physical Downlink Control CHannel) which is the modulated CC to the mobile station.

Further, as the different other exemplary embodiment, a control method is performed at a base station and includes a changing process to change the CC (Component Carrier) on which the DCI (Downlink Control Information) including the uplink control information is mapped.

Further, in the different other exemplary embodiment, a control method performed at a mobile station includes: a receiving process to receive the PDCCH (Physical Downlink Control CHannel) which is the modulated CC (Component Carrier) on which the DCI (Downlink Control Information) including the uplink control information is mapped; an acquiring process to acquire the DCI mapped on the CC in the PDCCH; and a transmitting process to transmit the PUSCH (Physical Uplink Shared CHannel) based on the uplink control information included in the DCI acquired by the acquiring process.

Further, as the other exemplary embodiment, a program to be executed in a base station makes a computer execute a changing process to change the CC (Component Carrier) on which the DCI (Downlink Control Information) including the uplink control information is mapped.

Further, as the other exemplary embodiment, a program to be executed in a base station makes a computer execute: a receiving processing to receive the PDCCH (Physical Downlink Control CHannel) which is the modulated CC (Component Carrier) on which the DCI (Downlink Control Information) including the uplink control information is mapped; a acquiring processing to acquire the DCI mapped on the CC in the PDCCH; and a transmitting processing to transmit the PUSCH (Physical Uplink Shared CHannel) based on the uplink control information included in the DCI acquired by the acquiring processing.

In the patent literatures 1-3 and the non-patent literature 1 mentioned above, neither the description nor the suggestion are made at all about the point of changing the CC (Component Carrier) on which the DCI (Downlink Control Information) including the uplink control information is mapped. In contrast, by providing the base station, the communication system, the control method and the program in the other exemplary embodiments as described above, it is possible to change the CC on which the DCI including the uplink control information is mapped.

This application is based upon and claims the benefit of priority from Japanese patent application No. 2009-125435, filed on May 25, 2009, the disclosure of which is incorporated herein in its entirety by reference.

### [Industrial Applicability]

The present invention is effective in a system of wireless communication via a base station.

### [Reference Signs List]

- 100: Base station
- 200_1-n: Mobile station
- 101: DCI generating unit
- 102: Encoding unit
- 103: CC mapping unit
- 104: Control unit
- 105: Transmitting and receiving unit
- 106: CC de-mapping unit
- 107: Decoding unit
- 201: Transmitting and receiving unit
- 202: CC de-mapping unit
- 203: Blind decoding unit
- 204: DCI detecting unit
- 205: UL-CSH generating unit
- 206: Encoding unit
- 207: CC mapping unit

## Claims

1. A base station apparatus comprising:
changing means for changing a component carrier as a mapping target on which downlink control information including control information about uplink is mapped based on a predetermined processing procedure, among a plurality of component carriers having mutually different frequency bands within a frequency band used for downlink.

2. The base station apparatus according to claim 1, wherein the processing procedure includes a procedure that changes the component carrier as the mapping target periodically.

3. The base station apparatus according to claim 1 or 2, wherein the processing procedure includes a procedure that sets the component carrier as the mapping target by using channel quality information in each of the component carriers.

4. The base station apparatus according to claim 3, wherein the processing procedure includes a procedure mapping preferentially the downlink control information on the component carrier having fine channel quality in a channel quality order based on the channel quality information.

5. The base station apparatus according to any one of claims 1 to 4, wherein the changing means changes the component carrier as the mapping target in a case when a frequency bandwidth used for the uplink and a frequency bandwidth used for the downlink are different.

6. A communication system comprising:
a base station apparatus according to any one of claims 1 to 5; and
a mobile station that communicates with the base station apparatus by a wireless communication, based on control information about uplink and downlink control information acquired from the base station apparatus.

7. A mapping control method comprising:
acquiring necessary information to change component carrier as a mapping target on which downlink control information including control information about uplink is mapped, among a plurality of component carriers having mutually different frequency bands within a frequency band used for downlink; and
changing the component carrier as the mapping target based on the acquired information and a predetermined processing procedure.

8. A program storage medium stored a processing procedure, the processing procedure including a processing procedure to change a component carrier as a mapping target on which downlink control information including control information about uplink is mapped, among a plurality of component carriers having mutually different frequency bands in a frequency band used for downlink.
